# EUROPÄISCHE PATENTANMELDUNG

(11) **EP 2 292 375 A1**
(43) Veröffentlichungstag der Anmeldung: **09.03.2011**
(21) Anmeldenummer: 10174925.7
(22) Anmeldetag: 01.09.2010
(51) Int. Cl.: B23Q 3/10

(54) **Würfel- oder quaderförmige Aufspannvorrichtung**

(30) Priorität: 07.09.2009 CH 13802009
(71) Anmelder: Heinz Kisslig AG, 8552 Felben-Wellhausen (CH)
(72) Erfinder: Kisslig, Heinz, 8552 Felben-Wellhausen (CH)
(74) Vertreter: Schneider Feldmann AG Patent- und Markenanwälte

(57) **Zusammenfassung**

Zur Optimierung der Dauerhaftigkeit des Gewichtes und der Herstellbarkeit wird eine Aufspannvorrichtung (1) vorgeschlagen, die aus einem Block (2) auf einer Fussplatte (3) besteht. Der Block (2) weist einen Mantel (10) auf, an dessen Innenwand (18) Schienen (11) vorzugsweise in der Form von Zahnstangen (12) angeschweisst oder geklebt sind. Der verbleibende Hohlraum (17) wird mit Ausnahme eines Tragrohrs (20) mit einem Mineralguss (7) ausgefüllt, nachdem von Innen entsprechende Befestigungsaufnahmen angebracht sind.

## Beschreibung

Die vorliegende Erfindung betrifft eine Aufspannvorrichtung zum Aufspannen von Werkstücken auf einer Werkzeugmaschine oder in einem Bearbeitungszentrum, bestehend aus einem Block mit einer Fussplatte zur Befestigung auf einem Bearbeitungstisch und einer Vielzahl von Befestigungsaufnahmen.

Aufspannvorrichtung der vorgenannten Art sind seit vielen Jahren bekannt und werden von verschiedenen Anbietern hergestellt und vertrieben. Aufspannvorrichtung der hier interessierenden Art werden meistens unter dem Handelsbegriff "Aufspannwürfel" vertrieben. Üblicherweise handelt es sich bei diesen Aufspannvorrichtungen um hohle Blöcke aus Stahl oder Metallguss mit einer Fussplatte zur Befestigung auf einem Bearbeitungstisch, in deren seitlichen Wandungen eine Vielzahl von Schraubhülsen eingesetzt sind, die als Aufspannstellen oder Befestigungsstellen dienen. Solche Aufspannwürfel sind entsprechend extrem schwer.

Im Werkzeugmaschinenbau ist heute die Tendenz vorhanden, immer schneller arbeitende Maschinen zu bauen, und entsprechend müssen die Massen schnell bewegt werden. Dies bedingt immer leichtere Werkzeugbearbeitungsmaschinen. Dies trifft auch auf Bearbeitungszentren zu. Solche Bearbeitungszentren haben viele Bearbeitungsachsen die gleichzeitig oder zeitverschoben auf verschiedene Werkstücke einwirken können. Mit Hilfe von Aufspannwürfeln lassen sich auf verschiedenen Ebenen Werkstücke aufspannen, die entsprechend bearbeitbar sind. Die leichteren und schnelleren Werkzeugmaschinen neigen zu Schwingungen bei hohen Frequenzen und entsprechend sind relativ schwere Aufspannvorrichtungen, nach bisheriger Auffassung, sinnvoll. Die leichteren Konstruktionen der Werkzeugmaschinen kommen dann jedoch nahe den Belastungsgrenzen.

Seit kurzer Zeit sind nun solche Aufspannvorrichtung auf dem Markt erhältlich, die aus einem sogenannten Mineralguss hergestellt sind. Beim Mineralguss handelt es sich um eine Mischung aus Epoxydharzen, der insbesondere Quarzsand beigegeben ist. Dieses Material ist wesentlich leichter als Stahl und hat zusätzlich die Eigenschaft besser schwingungsdämpfend zu wirken als Stahl oder Grauguss. Daher ist man vermehrt dazu übergegangen, Aufspannvorrichtung der hier interessierenden Art aus einem Block aus Mineralguss zu fertigen.

Solche Blöcke aus Mineralguss werden in einer entsprechend gefertigten Form gegossen. Die Form weist in einem vorgegebenen Raster Durchgangsbohrungen auf. Im Bereich der Durchgangsbohrungen werden Schraubhülsen auf der Innenseite gehalten und von der Aussenseite mit einer entsprechend passenden Schraube an der Gussform festgeschraubt. Ist der Guss ausgehärtet, werden die Schrauben entfernt und der fertige Block der Form entnommen. Dieser fertige Aufspannwürfel mit den Schraubhülsen im vorgegebenen Raster wird schliesslich noch auf einer Fussplatte montiert.

Aufspannvorrichtungen der vorgenannten Art mit einem Block aus Mineralguss haben die bereits zuvor genannten positiven Eigenschaften. Leider haben diese aber auch negative Eigenschaften. So braucht es für jedes Format eines Aufspannblockes eine gesonderte Form und für jeden Fall, dass ein Kunde ein besonderes Raster der Aufspannpunkte wünscht, wiederum eine neue Form. Entsprechend lassen sich Einzelanfertigungen nicht zu einem vernünftigen Preis herstellen.

Hinzu kommt, dass man bei derart grossen Blöcken auch dann, wenn die Form relativ langsam füllt und sogar vorwärmt, nicht verhindern kann, dass sich hierbei Lunker bilden. Tatsächlich weisen die Oberflächen solcher Aufspannblöcke aus Mineralguss eine Vielzahl von kleineren und grösseren Lunkern auf. Während der Benutzung auf Werkzeugmaschinen oder in Bearbeitungszentren werden Kühlmittel mit relativ hohem Druck auf das zu bearbeitende Werkstück bzw. auf das Werkzeug gerichtet und dieser Strahl wirkt direkt oder indirekt auch auf die Oberfläche des Aufspannwürfels. Hierdurch werden die Lunker immer stärker auserodiert und darin können sich Metallspäne verfangen die zusätzlich eine Erosionswirkung haben und gleichzeitig die Aufspannfläche, gegebenenfalls uneben machen.

Es ist daher die Aufgabe der vorliegenden Erfindung, eine Aufspannvorrichtung der obgenannten Art derart zu verbessern, dass kundenspezifische Normen eingehalten werden können, ohne dass hierdurch wesentliche Mehrkosten entstehen und gleichzeitig die Lebensdauer der Aufspannvorrichtung verlängert und das Produkt verbessert wird.

Diese Aufgabe löst eine Aufspannvorrichtung gemäss dem Oberbegriff des Patentanspruches 1, wobei der Block aus einem Metallmantel besteht, mit an der Innenseite, parallel zu den vertikalen Seitenkanten verlaufenden Schienen und einer den Mantel standseitig verschliessenden Deckel, wobei der Innenraum mit einem Mineralguss ausgefüllt ist und durch die Mantelwand im Bereich der Schienen in diese hineinragende Bohrungen vorhanden sind, in denen die Befestigungsaufnahmen gehalten sind.

Weitere vorteilhafte Ausgestaltungsformen des Erfindungsgegenstandes gehen aus den abhängigen Ansprüchen hervor.

In der Zeichnung ist eine bevorzugte Ausführungsform des Erfindungsgegenstandes dargestellt, und anhand der nachfolgenden Beschreibung mit Bezug auf die anliegenden Zeichnungen erläutert.

### Es zeigt:

- Fig. 1: eine Seitenansicht der erfindungsgemässen Aufspannvorrichtung unter Weglassung der Fussplatte, und
- Fig. 2: dieselbe Aufspannvorrichtung in perspektivischer Darstellung mit Blick leicht von oben, wiederum unter Weglassung der Fussplatte, und vor der Einfüllung des Mineralgusses;
- Fig. 3: die Aufspannvorrichtung in einem Vertikalschnitt entlang der Linie A-A in Figur 4, wobei hier die Fussplatte teilweise ersichtlich ist, während
- Fig. 4: eine Aufsicht auf die Vorspannvorrichtung zeigt.
- Fig. 5: zeigt eine zahnstangenförmige Schiene vor dessen Einbau in die Aufspannvorrichtung, für sich allein in perspektivischer Darstellung. Schliesslich ist in
- Fig. 6: noch eine andere Ausgestaltungsform der erfindungsgemässen Aufspannvorrichtung in einem horizontalen Schnitt.

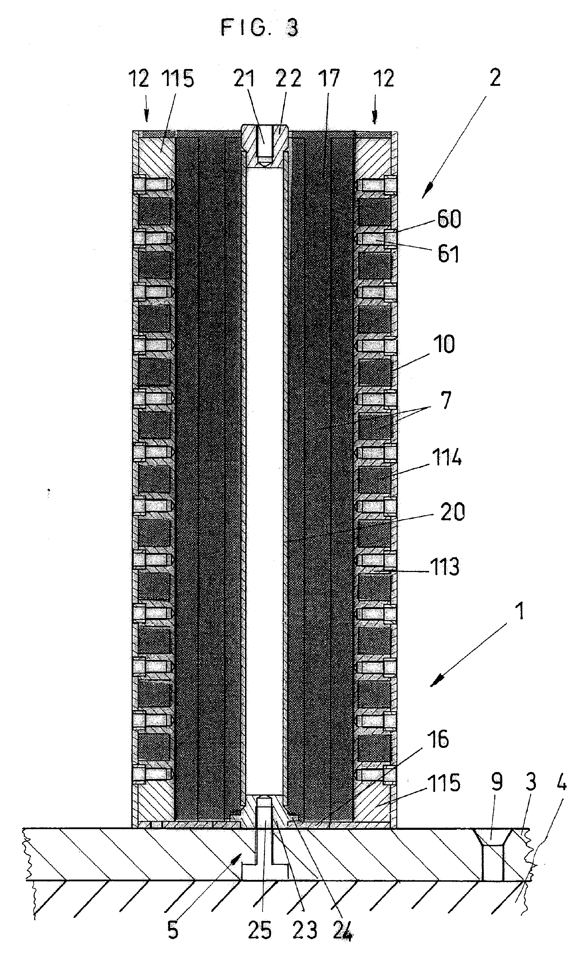

Wie bereits eingangs erwähnt, besteht eine erfindungsgemässe Aufspannvorrichtung aus einem Block und einer Fussplatte. Die Fussplatte, die gegenüber herkömmlichen Aufspannvorrichtungen unverändert ist, ist lediglich schematisch in der Figur 3 gezeigt, ansonsten jedoch zur Entlastung der Zeichnung weggelassen.

Die Aufspannvorrichtung ist insgesamt mit 1 bezeichnet. Sie umfasst die beiden Hauptelemente, nämlich einen Block 2 und die erwähnte Fussplatte 3. Die gesamte Aufspannvorrichtung 1 lässt sich auf einem Maschinen- oder Bearbeitungstisch 4 in gewünschter Lage befestigen.

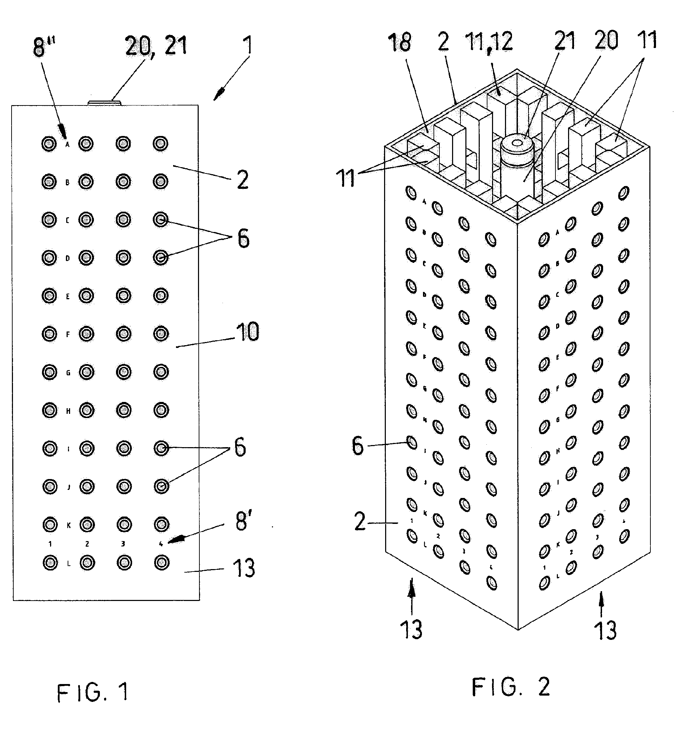

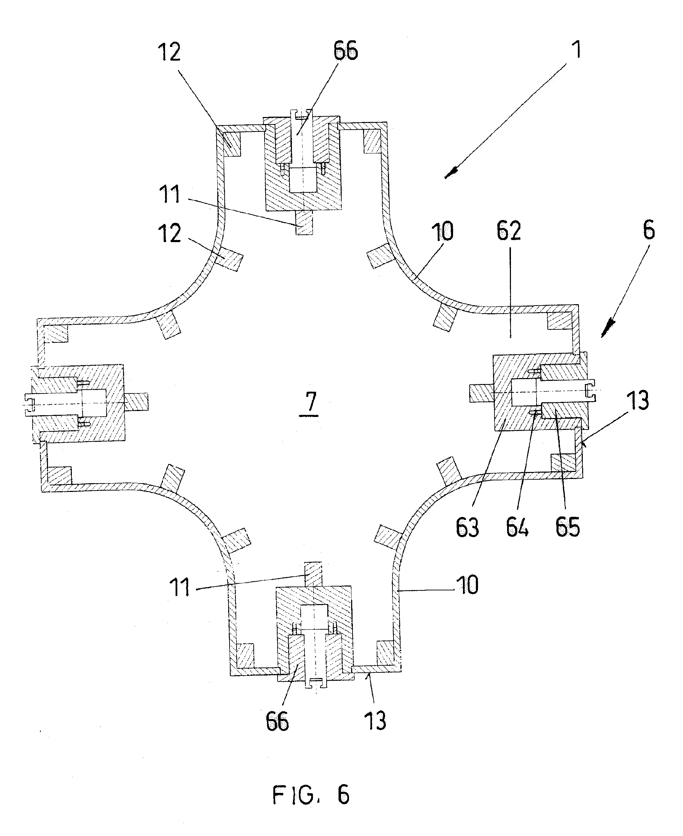

Aufspannvorrichtung der hier interessierenden Bauart werden im Handel als Aufspannwürfel bezeichnet. Dies ist insofern verwirrend, als dass der eigentliche Aufspannblock 2 zwar ein Würfel sein kann, meist jedoch die Form eines Quaders hat oder auch die Form eines Prismas mit sechs- oder achtkantigem, oder anders gestalteten Grundriss, wie zum Beispiel die Version gemäss Fig. 6 zeigt. Daher wird statt des Begriffes Würfel der hier allgemeiner Begriff des Blocks oder Aufspannblocks 2 verwendet. Dieser Aufspannblock 2 ist für sich allein in den Figuren 1 und 2 dargestellt.

In der Seitenansicht nach Figur 1, die gleich dem Aufriss ist, ist einerseits der Mantel 10 ersichtlich und andererseits die Vielzahl von Befestigungsaufnahmen 6. Mittig ragt oben über dem Mantel 10 das Ende eines Tragrohres 20 hinaus. Ferner sind auf jeder Mantelwand der Befestigungsfläche horizontale Koordinatenangaben 8' und vertikale Koordinatenangaben 8" ersichtlich. Die horizontalen Koordinatenangaben 8' sind hier in Form von einer Zahlenfolge angegeben, während die vertikalen Koordinatenangaben in alphabetischer Weise angegeben sind. Hiermit ist jede Befestigungsaufnahme 6 eindeutig auf jeder Fläche definiert. Die einzelnen Befestigungsflächen des Mantels 10 können zudem noch mit römischen Zahlen versehen sein, doch ist dies hier nicht ersichtlich.

In der Figur 2 ist der Block oder Aufnahmeblock 2 von oben einsehbar. Der einzubringende Mineralguss 7 ist hier noch nicht vorhanden bzw. als nicht vorhanden gezeichnet. Entsprechend erkennt man die Innenseiten 18 des Mantels 10. Auf diesen Innenseiten 18 des Mantels 10 sind hier gleichmässig verteilt Schienen 11 angeordnet. Diese Schienen 11 sind auf der Mantelwandinnenseite 18 aufgeschweisst. Ferner ist in der Figur 2 auch wiederum das Tragrohr 20 ersichtlich. Auf diesem Tragrohr 20 ist ein Zapfen 22, beispielsweise eingeschraubt oder mittels Presssitz gehalten. Der Zapfen 22 weist ein Mittel 21 zum Anbringen einer Tragöse auf. Dieses Mittel ist im vorliegenden Fall ein Gewindesackloch.

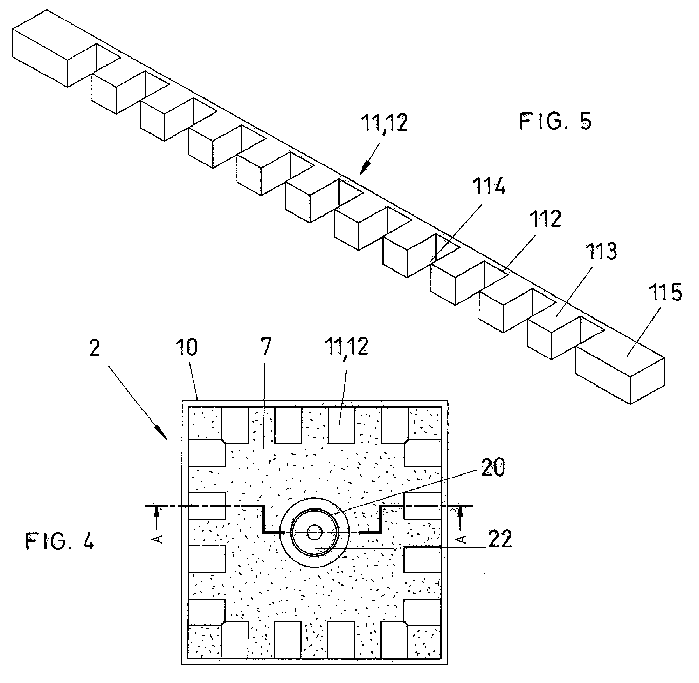

Bezüglich der Ausgestaltung der Schienen 11 wird auf die Figur 5 verwiesen. Prinzipiell könnte die Schiene 11 ein einfacher, im Querschnitt rechteckiger, Stab sein. Bevorzugterweise wird jedoch die Schiene 11 als eine Zahnstange geformt. Diese Zahnstange wird mit 12 bezeichnet. Die Zahnstange 12 hat einen durchgehenden Zahngrund 112. Die Zähne sind als kubische Klötze 113 gestaltet. Zwischen den einzelnen Klötzen 113 sind Aussparungen 114 vorhanden. Die Grösse der Klötze 113 müssen mindestens so gross gewähnt werden, dass mindestens eine Befestigungsaufnahme 6 darin angebracht werden kann. Diese Befestigungsaufnahmen 6 werden erst angebracht nachdem die Schienen 11 am Mantel 10 angeschweisst sind, und der Mantel 10 mittels eines Mineralgusses gefüllt und ausgehärtet ist. Neben der hier dargestellten Form, bei der jeder der Klötze 113 zur Anbringung einer Befestigungsaufnahme 6 gestaltet ist, können diese Klötze 113 selbstverständlich auch grösser sein, so dass zwei oder mehr Befestigungsaufnahmen 6 darin Platz haben. Ferner sind die Endklötze 115 ohnehin grösser gestaltet, um einerseits einen genügenden Abstand über der Fussplatte zu bewirken und andererseits einen genügenden Abstand vom oberen Rand des Mantels 10. Dies erlaubt es auch im oberen Endklotz 115 eine Sacklochbohrung anzubringen als Mittel 21' zur Anbringung von Tragösen. Dies ist beispielsweise in der Figur 4 gezeigt.

Dank der Aussparungen 114 gibt es zwischen den Klötzen 113 und der Mantelwand 10 Zwischenräume die vom Zahnstangengrund 112 abgedeckt sind und so eine hervorragende Verankerung des Mineralgusses 7 im Mantel 10 bewirken.

In der Figur 3 ist dieser Mineralguss 7 als punktierte Fläche gezeichnet. Unter einem Mineralguss 7 wird hier eine Mischung aus härtenden Epoxydharzen mit einem gewissen Anteil an mineralischem Zuschlag, insbesondere von Quarzsand von mehr als 30%, insbesondere mit mehr als 50%, verstanden. Dieser Gewichtsanteil an Quarzsand kann noch höher sein, je nach Kundenwünsche. Je höher der Gewichtsprozentanteil an Quarzsand ist, umso höher wird das Gesamtgewicht des Aufspannblocks.

Im Vertikalschnitt gemäss der Figur 3 erkennt man, dass der Mantel 10 unten mittels eines Deckels 16 verschlossen ist. In diesem Deckel 16 ist eine Hülse 23 mit einem Flansch 24 gehalten, der mit dem Deckel 16 verbunden ist. In der Hülse 23 ist ein Gewindesackloch 25 eingeformt. Dieses Gewindesackloch 25 dient beispielsweise der lösbaren Schraubverbindung des Aufspannblocks 2 mit der Fussplatte 3. Die Fussplatte 3 wiederum weißt Mittel 9 auf, zur Befestigung der Fussplatte auf einem Maschinenbett M.

In dieser Figur 3 erkennt man ferner die Ausgestaltung der Befestigungsaufnahmen 6. In dargstelltem Beispiel handelt es sich um Durchführungshülsen 60, die im Mantel 10 und in den darunter befindlichen Klötzen 113 verankert sind. Fluchtend mit der weiten Öffnung der Durchführungshülse 60 ist ein Gewindesackloch 61 vorhanden.

Die Befestigungsaufnahmen 6 können auch als Schraubenhülsen realisiert sein, doch müssen auch diese in den Klötzen 113 der Schiene 11 oder Zahnstange 12 verankert sein. Je nach Dicke des Mantels 10 können sich auch die Durchführungshülsen 60 erübrigen.

In der Figur 6 ist letztlich noch eine Aufspannvorrichtung 1 mit einer speziellen Form eines Aufspannblocks 2 dargestellt. Wie bereits eingangs erwähnt kommen verschiedenste Prismenformen in Frage. Bei einer solchen Form wie hier dargestellt, wird eine Volumenreduktion erzielt. Die einzelnen Aufspannflächen 13 eines Blocks können auf jeder Seite unterschiedliche Befestigungsaufnahmen 6 aufweisen. Es ist jedoch meist nicht sinnvoll an einer Aufspannfläche 13 eines Blocks verschiedene Befestigungsaufnahmen 6 anzubringen.

In der Fig. 6 sind nun auf allen vier Aufspannflächen 13 als Befestigungsaufnahmen 6 sogenannte Nullpunkt-Spannkörper 62. Solche Systeme werden von diversen Herstellern angeboten, wie zum Beispiel durch die Firma Högg in Lichtensteig, Schweiz unter der Bezeichnung KOLIBRI. Die Nullpunkt-Spannkörper 62 besitzen ein Gehäuse 63, welches auf der Innenseite des Mantels 10 im Bereich einer Aufspannfläche 13 angeschweisst sind. Die Schienen 11 beziehungsweise Zahnstangen 12 können dabei zu erhöhten Veränderungen auch an den Gehäusen 63 angeschweisst sein. Im Gehäuse 63 verlaufen hydraulische Leitungen 64. Hierdurch lässt sich ein kolbenartiges Element 65 bewegen eine Zange 66 relativ zum Kolben in diesen hineinfahren. An den Zangen 66 lassen sich Spannzapfen befestigen, die mit Paletten und anderen Werkstücken tragende Elemente aufspannen lassen. Die hydraulische Zufuhr lässt sich durch die Fussplatte 3 von dort entweder durch gebohrte Leitungen in den Schienen 11 oder durch den Hohlraum 17 mittels entsprechenden Leitungen, die danach eingegossen und folglich geschützt sind, realisieren.

Verlaufen die hydraulischen Leitungen 64 von der Fussplatte 3 zu den Schienen 11, so sieht man bevorzugterweise eine einzige zentrale Zufuhr vor. Die hydraulische Leitung 64 in den Schienen 11 verlaufen dabei in jene Schienen , die auf den Gehäusen 63 angebracht sind. Hierbei wird man hier keine Zufuhrstange verwenden. Dies ist noch nicht nötig, da diese Schienen 11 ohnehin distanziert vom Mantel 10 verlaufen.

Die Kombination des Blockes aus Mineralguss mit einem Metallmantel verbindet die Vorteile der reinen Metallaufspannwürfel mit den Vorteilen der reinen Mineralgussaufspannwürfel. Der gegossene Kern 17 erbringt die Schwingungsdämpfung und reduziert das Gewicht gegenüber einem rein metallenen Aufspannwürfel und der metallene Mantel bildet ein gegen Schläge weitgehend unempfindlicher Schutz, während der Mantel gleichzeitig eine praktisch erosionssichere Oberfläche bildet. Hinzu kommt, dass der Metallmantel als verlorene Gussform des Mineralgusskernes bildet und man zuvor alle Vorkehrungen treffen kann für die gewünschten Befestigungsaufnahmen, die man anzubringen wünscht.

### Bezugszeichenliste:

- 1: Aufspannvorrichtung
- 2: Block oder Würfel
- 3: Fussplatte
- 4: Bearbeitungstisch
- 5: Verbindung Fussplatte-Block
- 6: Befestigungsaufnahmen
- 7: Mineralguss
- 8', 8": Koordinatenangaben
- 9: Mittel zur Befestigung
- 10: Mantel
- 11: Schiene
- 12: Zahnstange
- 13: Aufspannfläche
- 16: Deckel
- 17: Hohlraum
- 18: Innenseite des Mantels
- 20: Tragrohr
- 21: Mittel zum Anbringen von Tragösen
- 22: Zapfen auf Tragrohr
- 23: Hülse
- 24: Flansch
- 25: Gewindesackloch
- 60: Durchführungshülse
- 61: Gewindesackloch
- 62: Nullpunkt-Spannkörper
- 63: Gehäuse

- 64: hydraulische Leitungen
- 65: kolbenartiges Element
- 66: Zange
- 112: Zahnstangengrund
- 113: Klötze
- 114: Aussparungen
- 115: Endklötze der Zahnstangen
- M: Maschinenbett

## Patentansprüche

1. Aufspannvorrichtung (1) zum Aufspannen von Werkstücken auf einer Werkzeugmaschine oder in einem Bearbeitungszentrum, bestehend aus einem Block (2) mit einer Fussplatte (3) zur Befestigung auf einem Bearbeitungstisch (4) und einer Vielzahl von Befestigungsaufnahmen (6), **dadurch gekennzeichnet, dass** der Block (2) aus einem Metallmantel (10) besteht, mit an deren Innenseite (18), parallel zu den vertikalen Seitenkanten verlaufenden Schienen (11) und einer den Mantel standseitig verschliessenden Deckel (16), wobei der Innenraum mit einem Mineralguss (7) ausgefüllt ist und durch die Mantelwand (10) im Bereich der Schienen (11) hineingreifende Befestigungsaufnahmen (6) vorhanden sind.

2. Aufspannvorrichtung nach Anspruch 1, **dadurch gekennzeichnet, dass** die Schienen (11) zahnstangenförmig (12) gestaltet sind und die Zähne als kubische Klötze (113) geformt sind.

3. Aufspannvorrichtung nach Anspruch 2, **dadurch gekennzeichnet, dass** die zahnstangenförmigen Schienen (12) mit den Oberflächen der Klötze (113) an der Innenseite (18) des Mantels (10) anliegend befestigt sind.

4. Aufspannvorrichtung nach Anspruch 1, **dadurch gekennzeichnet, dass** mindestens zwei Schienen (11) mit ihrer oberen Stirnfläche aus der Blockoberseite herausragen oder mit dieser fluchten und mit Mittel (21) zur Anbringung von Tragoesen oder -haken versehen sind.

5. Aufspannvorrichtung nach Anspruch 4, **dadurch gekennzeichnet, dass** die Mittel (21) zur Anbringung von Tragoesen oder -haken Gewindelöcher sind.

6. Aufspannvorrichtung nach Anspruch 1, **dadurch gekennzeichnet, dass** auf den Deckel (16) mittig ein Tragrohr (20) oder -stab angebracht ist, der aus der Blockoberseite herausragt oder mit diesen fluchtet und mit Tragmittel (21) versehen oder versehbar sind.

7. Aufspannvorrichtung nach Anspruch 1, **dadurch gekennzeichnet, dass** der Mineralguss (7) aus einer Mischung von Epoxydharz und einer Bemischung von mindestens Vol 50% mineralischen Zuschlagstoffen, insbesondere Quarzsand besteht.

8. Aufspannvorrichtung nach Anspruch 1, **dadurch gekennzeichnet, dass** die Befestigungsaufnahmen Nullpunkt-Aufspannsysteme (62) sind.

9. Aufspannvorrichtung nach Anspruch 1, **dadurch gekennzeichnet, dass** der Block (2) beziehungsweise der Mantel (10) mindestens vier Aufspannflächen aufweisen, von denen jeweils zwei benachbarte Aufspannflächen orthogonal zueinander verlaufen.

10. Aufspannvorrichtung nach Anspruch 8, **dadurch gekennzeichnet, dass** die Nullpunkt-Aufspannsysteme (62) hydraulisch betätigbar sind und die hydraulischen Leitungen (64) zentral durch die Fussplatte (3) zu den entsprechenden Bereichen der Aufspannflächen erfolgen.

11. Aufspannvorrichtung nach Anspruch 10, **dadurch gekennzeichnet, dass** die hydraulischen Leitungen (64) von der Fussplatte (3) durch die Schienen (11), die an den Nullpunkt-Aufspannsystemen (62) befestigt sind, zu diesen geführt sind.
